# EUROPEAN PATENT APPLICATION

(11) **EP 4 151 662 A1**
(43) Date of publication of application: **22.03.2023**
(21) Application number: 21804769.4
(22) Date of filing: 12.05.2021
(51) Int. Cl.: C08B 37/16, C08G 18/48, C08G 65/08, C08G 65/329, C08K 5/29, C08L 71/02

(54) **POLYROTAXANE HAVING GROUP THAT HAS CHAIN FORMED BY HAVING CIRCULAR MOLECULE HAVE PROPYLENEOXY REPEATING UNIT**

(30) Priority: 13.05.2020 JP 2020084171
(71) Applicant: ASM Inc., Kashiwa-shi, Chiba 277-0882 (JP)
(72) Inventor: HAYASHI, Yuki, Kashiwa-shi, Chiba 277-0882 (JP)
(74) Representative: Reitstötter Kinzebach
(86) International application number: PCT/JP2021/017982
(87) International publication number: WO 2021/230268

(57) **Abstract**

The present invention provides a polyrotaxane which exhibits more excellent compatibility with various solvents, while having good processability. The present invention provides a polyrotaxane which is obtained by arranging blocking groups on both ends of a pseudopolyrotaxane, wherein a linear molecule passes through the opening of a circular molecule in a skewering manner, for the purpose of preventing elimination of the circular molecule. This polyrotaxane has a group which has a chain that is formed by having the circular molecule have a propyleneoxy repeating unit; and this polyrotaxane is soluble in a polyalkyleneoxy polyol, which has a number average molecular weight of 1,000 or more, at room temperature.

## Description

### Technical Field

The present invention relates to a polyrotaxane comprising a group having a chain comprised of a propyleneoxy repeating unit in a cyclic molecule, in particular, the polyrotaxane which is soluble in a polyalkylene polyol having a number average molecular weight of 1,000 or more at room temperature.

### Background Art

A polyrotaxane comprising capping groups each locating at each end of a pseudopolyrotaxane, which has a linear molecule and a cyclic molecule(s) in which the linear molecule is included in a cavity (cavities) of the cyclic molecule(s) in a skewered manner, in order to prevent the dissociation of the cyclic molecule(s), has been expected to be used in various materials, since the materials can have excellent elongation, excellent flexibility and the like.

In order to utilize the characteristics of the polyrotaxane, there are various reports that improve the solubility of the polyrotaxane in various solvents, and reports that modify the hydroxyl group(s) of the cyclic molecule of the polyrotaxane, for example, α-cyclodextrin (hereinafter, may be simply abbreviated as "α-CD") with various modifying groups to impart functionality into the polyrotaxane.

For example, Patent Document 1 discloses a polyrotaxane having hydrolysis resistance, specifically, a polyrotaxane having a propylene oxide side chain having an average degree of polymerization of 1.1 to 10.0 at the hydroxyl group of α-CD, which is a cyclic molecule of the polyrotaxane.

### Prior Art Document

### Patent Document

Patent Document 1: WO2018/225704.

### Disclosure of the Invention

### Problems to be solved by the Invention

However, since the polyrotaxane disclosed in Patent Document 1 does not dissolve in polypropylene glycol having a number average molecular weight of 1,000 at room temperature, it is required that a polyrotaxane has excellent compatibility with various solvents and has processability. Further, in addition to excellent compatibility and processability, it is required that the crosslinked body obtained by using the polyrotaxane has excellent viscoelasticity.

An object of the present invention is to provide a polyrotaxane having excellent compatibility with various solvents and having processability.

Further, an object of the present invention is, in addition to, or other than the above object, to provide a polyrotaxane, which can provide a crosslinked body having excellent viscoelasticity, which is obtained by using the polyrotaxane.

More, an object of the present invention is, in addition to, or other than the above objects, to provide a molded article such as a crosslinked body obtained by using the above-mentioned polyrotaxane.

### Means for Solving Problems

In order to achieve the above-mentioned objects, the present inventor has found the following inventions:
<1> A polyrotaxane comprising capping groups each locating at each end of a pseudopolyrotaxane, which has a linear molecule and a cyclic molecule(s) in which the linear molecule is included in a cavity (cavities) of the cyclic molecule(s) in a skewered manner, in order to prevent the dissociation of the cyclic molecule(s),
   wherein the cyclic molecule comprises a group having a chain comprised of a propyleneoxy repeating unit, and
   the polyrotaxane dissolves in polyalkyleneoxy polyol having a number average molecular weight of 1,000 or more, preferably a number average molecular weight of 1,500 to 6,000, more preferably a number average molecular weight of 2,000 to 5,000 at room temperature.
<2> In the above item <1>, the polyrotaxane may comprise a hydroxyl group, and a hydroxyl group value of the polyrotaxane may range from 40 to 130 mgKOH/g, preferably from 50 to 110 mgKOH/g, more preferably from 70 to 100 mgKOH/g.
<3> A composition comprising the (A) polyrotaxane described in the above item <1> or <2>; and (B) a polyol.
<4> In the above item <3>, the composition may further comprise (C) a compound having two or more isocyanate groups.
<5> In the above item <3> or <4>, when the total weights of the (A) polyrotaxane and the (B) polyol are normalized into 100 parts by weight, the (A) polyrotaxane may comprise 0.1 to 55.0 parts by weight, preferably 1.0 to 40.0 parts by weight, more preferably 3.0 to 30.0 parts by weight, among the 100 parts by weight.
<6> In any one of the above items <3> to <5>, the (B) polyol may be polypropyleneoxypolyol having a number average molecular weight of 1,000 or more, preferably 2,000 or more, more preferably 3,000 or more, and the modification or copolymer thereof.
<7> A molded article formed from the composition described in any one of above items <3> to <6>.

### Effects of the Invention

The present invention can provide a polyrotaxane having excellent compatibility with various solvents and having processability.

Further, in addition to, or other than the above effect, the present invention can provide a polyrotaxane, which can provide a crosslinked body having excellent viscoelasticity, which is obtained by using the polyrotaxane.

More, in addition to, or other than the above effects, the present invention can provide a molded article such as a crosslinked body obtained by using the above-mentioned polyrotaxane.

### Embodiments for Carrying out the Invention

The present invention described in the present application will be described in detail hereinafter.

The present invention provides a polyrotaxane comprising capping groups each locating at each end of a pseudopolyrotaxane, which has a linear molecule and a cyclic molecule(s) in which the linear molecule is included in a cavity (cavities) of the cyclic molecule(s) in a skewered manner, in order to prevent the dissociation of the cyclic molecule(s),
wherein the cyclic molecule comprises a group having a chain comprised of a propyleneoxy repeating unit, and
the polyrotaxane dissolves in polyalkyleneoxy polyol having a number average molecular weight of 1,000 or more, preferably a number average molecular weight of 1,500 to 6,000, more preferably a number average molecular weight of 2,000 to 5,000 at room temperature.

### <Polyrotaxane comprising a group having a chain comprised of a propyleneoxy repeating unit in the cyclic molecule>

The present invention provides a polyrotaxane comprising a group having a chain comprised of a propyleneoxy repeating unit.

The polyrotaxane according to the present invention can dissolve in polyalkyleneoxy polyol having a number average molecular weight of 1,000 or more, preferably a number average molecular weight of 1,500 to 6,000, more preferably a number average molecular weight of 2,000 to 5,000 at room temperature by having the propyleneoxy repeating unit.

The polyalkyleneoxy polyol used herein means a compound having two or more hydroxyl groups and alkyleneoxy repeating unit(s). Specifically, examples of the polyalkyleneoxy polyol may include, but are not limited to, polypropylene glycol, polypropylene glycol triol type, polytetramethylene glycol, polypropylene oxy-block-polyethyleneoxy polyol, polypropylene oxy-block-polycaprolactone polyol, polypropylene oxy-block-polylactic acid polyol, and the like.

By making the polyrotaxane according to the present invention soluble in the polyalkyleneoxy polyols at room temperature, the polyrotaxane according to the present invention can be uniformly dispersed in a material containing polyalkyleneoxy polyol as a main component, and by processing and (hardening) reaction, the effects of improvement in the flexibility and the strength of the material can be expected.

The cyclic molecule in the polyrotaxane according to the present invention may comprise a first functional group capable of reacting with other material(s) other than the group having the chain comprised of the propyleneoxy repeating unit. Examples of the first functional group may include a hydroxyl group, an amino group, a thiol group, a carboxylic acid group, an acid anhydride group, an epoxy group and the like, in particular, an hydroxyl group. In a case where the polyrotaxane according to the present invention, in particular, the cyclic molecule in the polyrotaxane according to the present invention comprises a hydroxyl group, a hydroxyl group value of the polyrotaxane may ranges from 40 to 130 mgKOH/g, preferably from 50 to 110 mgKOH/g, more preferably from 70 to 100 mgKOH/g.

The polyrotaxane according to the present invention may have 6.0 or more, preferably 10.0 or more, more preferably 15.0 or more of the propyleneoxy repeating unit.

Hereinafter, a "cyclic molecule", a "linear molecule", and a "capping group" which are components of the polyrotaxane will be described.

### <<Cyclic molecule>>

The cyclic molecule of the polyrotaxane according to the present invention is not limited as long as the cyclic molecule may be cyclic, and may have a cavity, and a linear molecule is included in the cavity (cavities) of the cyclic molecules in a skewered manner.

The cyclic molecule may have the above-described group having the chain comprised of the propyleneoxy repeating unit via an optional linker group. Furthermore, examples of the linker group may include, but are not limited to, -CH₂-CH₂-, -CH₂-CH₂-CH₂-, -CH₂-CH(OH) -CH₂-, -CH₂-CH₂-CH₂-CH₂-, -CO-CH₂-CH₂-, -CO-C(CH₃)₂-CH₂-, -CO-CH(OH)-CH₂-, -CO-CH₂-CH₂-CH₂-CH(CH₃)-, and the like.

The cyclic molecule may have a group other than the above-described group having the chain comprised of the propyleneoxy repeating unit. For example, the group other than the above-described group having the chain comprised of the propyleneoxy repeating unit may include, but are not limited to, an acetyl group, a propionyl group, a butyl ester group, a methoxy group, a propyl ether group, a butyl ether group, a butyl carbamoyl group, a cyclohexyl carbamoyl group, a hydroxyethyl group, a hydroxypropyl group, a hydroxybutyl group, 2,3-dihydroxypropyl group, a phenyl group, a benzylcarbamoyl group, a phenylethylcarbamoyl group, a benzyl ester group, a butylbenzyl ester group and the like.

The cyclic molecule may be, for example, selected from the group consisting of **α**-cyclodextrin, **β**-cyclodextrin and **γ**-cyclodextrin.

For example, a part of -OH groups in **α**-cyclodextrin and the like may be substituted with the above-described first group. Furthermore, a part of -OH groups in **α-**cyclodextrin and the like may be substituted with a group other than the above-described first group.

### <<Linear molecule>>

The linear molecule of the (A) polyrotaxane is not limited as long as the linear molecule may be included in a cavity (cavities) of the cyclic molecule(s) in a skewered manner.

For example, the linear molecule may include polyvinyl alcohol, polyvinylpyrrolidone, poly(meth)acrylic acid, cellulose-based resins (carboxymethylcellulose, hydroxyethylcellulose, hydroxypropylcellulose and the like), polyacrylamide, polyethylene oxide, polyethylene glycol, polypropylene glycol, polyvinyl acetal-based resins, polyvinyl methyl ether, polyamine, polyethyleneimine, casein, gelatin, starch and the like and/or copolymers thereof, polyolefin-based resins such as polyethylene, polypropylene, and copolymer resins with other olefinic monomers, polyester resins, polyvinyl chloride resins, polystyrene-based resins such as polystyrene, acrylonitrile-styrene copolymer resin and the like, acrylic resins such as polymethyl methacrylate, copolymer of (meth)acrylate, acrylonitrile-methyl acrylate copolymer resin and the like, polycarbonate resins, polyurethane resins, vinyl chloride-vinyl acetate copolymer resin, polyvinylbutyral resin and the like; and derivatives and modifications thereof, polyisobutylene, polytetrahydrofuran, polyaniline, acrylonitrile-butadiene-styrene copolymer (ABS resin), polyamides such as nylon and the like, polyimides, polydienes such as polyisoprene, polybutadiene and the like, polysiloxanes such as polydimethylsiloxane and the like, polysulfones, polyimines, polyacetic anhydrides, polyureas, polysulfides, polyphosphazenes, polyketones, polyphenylenes, polyhaloolefins, and derivatives thereof. For example, the linear molecule may be selected from the group consisting of polyethylene glycol, polyisoprene, polyisobutylene, polybutadiene, polypropylene glycol, polytetrahydrofuran, polydimethylsiloxane, polyethylene, polypropylene, polyvinyl alcohol and polyvinyl methyl ether. In particular, the linear molecule may be polyethylene glycol.

A weight average molecular weight of the linear molecule may be 1,000 or more, preferably 3,000 to 100,000, more preferably 6,000 to 50,000.

In the polyrotaxane used herein, the combination of (cyclic molecule, linear molecule) may be (one derived from **α**-cyclodextrin, one derived from polyethylene glycol).

### <<Capping group>>

The capping group of the polyrotaxane according to the present invention is not limited, as long as the group is located at both ends of a pseudopolyrotaxane, and the group has a function of preventing dissociation of a cyclic molecule(s) from a linear molecule.

For example, the capping group may be selected from the group consisting of dinitrophenyl groups; cyclodextrins; adamantane groups; trityl groups; fluoresceins; silsequioxanes; pyrenes; substituted benzenes (example of the substituent may include, but are not limited to, alkyl, alkyloxy, hydroxy, halogen, cyano, sulfonyl, carboxyl, amino, phenyl and the like. The substituent may be single or plural.); polycyclic aromatics which may be substituted (examples of the substituent may include, but are not limited to, those described above. The substituent may be single or plural.); and steroids. Preferably, the capping group may be selected from the group consisting of dinitrophenyl groups; cyclodextrins; adamantane groups; trityl groups; fluoresceins; silsequioxanes; and pyrenes, more preferably adamantane groups or cyclodextrins.

### <Composition comprising the polyrotaxane according to the present invention>

The present invention provides a composition comprising the above-described polyrotaxane. In particular, the present invention provides a composition comprising the (A) polyrotaxane; and (B) a polyol.

A polyol used herein means a material having two or more OH groups.

Examples of the polyols may include, but are not limited to, polycarbonate polyols, polyether polyols, polyester polyols, polyolefin polyols, polysiloxane polyols, block copolymers or graft copolymers comprised of a plural kinds of polyols (for example, polyols comprising polyester, which is block-polymerized into polyether polyols), polymers each having two or more OH groups in a side chain thereof, and the like.

The polyol may be at least one selected from polyether polyols, polyester polyols, polycarbonate polyols, and polysiloxane polyols, preferably at least one selected from polyether polyols, polyester polyols, and polycarbonate polyols, more preferably at least one selected from polyether polyols and polyester polyols.

Examples of the polymers each having two or more OH groups in a side chain thereof may include a product having hydroxyl groups in a side chain thereof such as poly(meth)acrylate, polyvinyl chloride, polyvinyl acetate and the like.

Even when the number of OH groups that the polyol has is two, or three or more, the species of the polyol may be only one, or plural species thereof may be together used.

The polyol may have a weight average molecular weight of 50 to 30,000, preferably 250 to 10,000, more preferably 250 to 8,000.

The (B) polyol may be a polypropyleneoxypolyol and the modification or copolymer thereof having a number average molecular weight of 1,000 or more, preferably 2,00 or more, more preferably 3,000 or more.

When the total weights of the (A) polyrotaxane and the (B) polyol are normalized into 100 parts by weight, the (A) polyrotaxane may comprise 0.1 to 55.0 parts by weight, preferably 1.0 to 40.0 parts by weight, more preferably 3.0 to 30.0 parts by weight, among the 100 parts by weight.

More, the composition according to the present invention may further comprise (C) a compound having two or more isocyanate groups.

As the (C) compound having two or more isocyanate groups, well-known aliphatic, alicyclic and aromatic isocyanates may be used. Alternatively, as the (C) compound having two or more isocyanate groups, newly synthesized compound(s) may be used.

Examples of the (C) compound having two or more isocyanate groups may include, but are not limited to, hexamethylene diisocyanate (HDI), dodecamethylene diisocyanate, 2,2,4-trimethylhexamethylene diisocyanate, lysine diisocyanate, 2,6-diisocyanato methylcaproate, bis(2-isocyanatoethyl)fumarate, bis(2-isocyanatoethyl)carbonate, 2-isocyanatoethyl-2,6-diisocyanatohexanoate isophorone diisocyanate (IPDI), dicyclohexylmethane-4,4'-diisocyanate (hydrogenated MDI), cyclohexylene diisocyanate, methylcyclohexylene diisocyanate (hydrogenated TDI), bis(2-isocyanatoethyl)-4-cyclohexene, 1,3- and/or 1,4-phenylene diisocyanate, 2,4- and/or 2,6-tolylene diisocyanate (TDI), crude TDI, 2,4'- and/or 4,4'-diphenylmethane diisocyanate (MDI), 4,4'-diisocyanato biphenyl, 3,3'-dimethyl-4,4'-diisocyanato biphenyl, 3,3'-dimethyl-4,4'-diisocyanato diphenylmethane, crude MDI, 1,5-naphthalene diisocyanate, m- and/or p-xylylene diisocyanate (XDI), **α,α,α',α'**-tetramethyl xylylene diisocyanate (TMXDI), and the like, as well as the derivatives or polymer thereof, and polyisocyanates each having a polymer site in which plural of isocyanate groups are attached into known polymer.

An amount of the (C) compound having two or more isocyanate groups may be in a range as described below in a case of using the (C) compound having two or more isocyanate groups.

The amount of the (C) compound having two or more isocyanate groups may be adjusted such that a molar ratio of isocyanate groups of the (C) compound having two or more isocyanate groups to active hydrogen atoms of the polyol and the polyrotaxane, i.e., ((a molar amount of isocyanate groups) / (a molar amount of active hydrogen atoms of the polyol and the polyrotaxane)) may range from 0.30 to 2.00, preferably from 0.50 to 1.50, more preferably from 0.60 to 1.20.

Furthermore, the ratio ((a molar amount of isocyanate groups) / (a molar amount of active hydrogen atoms of the polyol and the polyrotaxane)) may be referred to as "NCO index".

Specific examples of the active hydrogen atoms may include hydrogens of the OH groups present in the polyol, and hydrogens or the like of OH groups present in polyrotaxane. Further, the active hydrogen atoms are not limited to hydrogen atoms derived from the OH groups. Thus, hydrogen atoms of the following groups also act as active hydrogen atoms: thiol groups, primary amino groups, secondary amino groups, and carboxylic acid groups present in the polyol and the polyrotaxane. Thus, a total molar amount of the hydrogen atoms is "a molar amount of active hydrogen atoms of the polyol and the polyrotaxane".

When active hydrogen atoms of a compound are derived from only OH groups thereof, an amount of the active hydrogen atoms therein can be represented by the hydroxyl group value, OHV, of the compound.

As the catalyst used to promote the reaction of (B) a polyol and/or (A) a polyrotaxane as well as (C) a compound having two or more isocyanate groups polyisocyanate, a variety of known urethanation catalysts can be used. Examples thereof may include tertiary amines such as triethylamine, tripropylamine, tributylamine, N-methylmorpholine, N-ethylmorpholine, dimethylbenzylamine, N,N,N',N'-tetramethylhexamethylenediamine, N,N,N',N',N"-pentamethyldiethylenetriamine, bis-(2-dimethylaminoethyl)ether, N,N-dimethylethanolamine, N,N-diethylethanolamine, 1,8-diazabicyclo[5.4.0]undecene-7,1,5-diazabicyclo[4.3.0]nonene-5,1,5-diazabicyclo[4.4.0]decene-5; metal carboxylates such as potassium acetate and potassium octylate; organometallic compounds such as stannous octoate, dibutyltin dilaurate, dioctyltin versatate, dioctyltin dilaurate, zinc naphthenate, bismuth trioctate (2-ethylhexanoic acid) and aluminum octylate, and the like.

Among them, at least one of these catalysts may be added to the formation of the crosslinked body.

An amount added may range from 0.01 to 5.0 % by mass with respect to polyols.

Upon forming the crosslinked body, a solvent may be used. The solvent may be removed after the step of producing the crosslinked body. The solvent may be used for the purpose of: making it easier to mix with the crosslinked body component; improving the compatibility between the crosslinked body components; adjusting the viscosity upon applying the composition comprising the solvent to the material having voids, and/or adjusting the rate of the crosslinking reaction after applying the composition comprising the solvent to the material having voids.

Examples of the solvent may include, but are not limited to, acetone, methyl ethyl ketone, cyclohexanone, ethyl acetate, butyl acetate, toluene, xylene, and the like.

### <<Other components other than the above component (A) to the above component (C) >>

As described above, the composition according to the present invention comprise the above component (A); and the above component (B); and optionally the above component (C), but may comprise other components other than the above component (A) to the above component (C).

The other components may include, but are not limited to, antioxidant agents, ultraviolet ray absorbers, crosslinking aids, surfactants, emulsifiers, plasticizers, polymer fine particles, metal oxides such as silica and alumina, surface conditioners, flame retardants, solvents, and the like.

The examples of plasticizers may include, but are not limited to, dibutyl phthalate, di-2-ethylhexyl phthalate, butyl benzyl phthalate, dihexyl phthalate, dioctyl adipate, bis(2-ethylhexyl) adipate, (2-ethylhexyl) tristrimellitate, tricresyl phosphate and the like.

The examples of ultraviolet ray absorbers may include, but are not limited to, 2-ethylhexyl paradimethylaminobenzoate, 2-ethylhexyl salicylate, 2,4-dihydroxybenzophenone, 2-hydroxy-4-n-octylbenzophenone, 2-(2'-hydroxy-5'-t-butylphenyl)benzotriazole, bis(2,2,6,6-tetramethyl-4-piperidyl)-sevacate, 2-ethylhexyl paramethoxycinnamate, isopropyl paramethoxycinnamate, ethylhexyl methoxycinnamate, octyl methoxycinnamate and the like.

The examples of solvents may include, but are not limited to, acetone, methyl ethyl ketone, toluene, xylene, ethyl acetate, butyl acetate, methanol, ethanol, isopropyl alcohol, water, dimethylformamide, dimethylacetamide, N-methylpyrrolidone, acetonitrile, cellosolve-based solvents such as ethyl cellosolve and butyl cellosolve, and the like.

The present invention provides a molded article formed from the above-described composition, specifically, a crosslinked body formed from the above-described composition.

A polyrotaxane according to the present invention, i.e., a polyrotaxane comprising a group having a chain comprised of a propyleneoxy repeating unit, may be prepared by following method:
The method comprises the steps of:
(I) preparing a first polyrotaxane comprising capping groups each locating at each end of a pseudopolyrotaxane, which has a linear molecule and a cyclic molecule(s) having a hydroxyl group in which the linear molecule is included in a cavity (cavities) of the cyclic molecule(s) in a skewered manner, in order to prevent the dissociation of the cyclic molecule(s); and
(II) reacting the first polyrotaxane and propylene oxide in the presence of metal base catalyst, in a temperature range of 100 to 150 °C, preferably 110 to 140 °C, more preferably 115 to 130 °C;
   thereby to obtain the second polyrotaxane in which the cyclic molecule(s) in the first polyrotaxane comprise(s) a group having a chain comprised of a propyleneoxy repeating unit.

### <Step (I)>

The step (I) is a step of preparing a polyrotaxane in which cyclic molecule(s) has a hydroxyl group.

This step can be carried out in a manner described in WO 2008/108411 and the like.

### <Step (II)>

The step (II) is a step of reacting the first polyrotaxane and propylene oxide in the presence of metal base catalyst, in a temperature range of 100 to 150 °C, preferably 110 to 140 °C, more preferably 115 to 130 °C.

Examples of the metal base catalyst may include, but are not limited to, potassium hydroxide, sodium hydroxide, potassium methoxide, sodium methoxyde, potassium carbonate, sodium carbonate and the like. As the metal base catalyst, potassium hydroxide and sodium hydroxide are preferable, depending on the temperature used in the reaction, the pressure used in the reaction, and the like.

Using this step results in that the propyleneoxy repeating unit can be efficiently made into a longer chain, and thus, preferable.

The above-described method may comprise steps other than the above-described step (I) and step (II).

Examples of the steps other than the step (I) and the step (II) may include, but are not limited to, a step of removing the solvent.

### <Method for preparing a molded article, for example a crosslinked body formed from the polyrotaxane according to the present invention>

The present invention provides a method for preparing a molded article, for example a crosslinked body formed from a polyrotaxane according to the present invention, in particular, a method for preparing molded article, for example a crosslinked body formed from a composition comprising a polyrotaxane according to the present invention.

The method comprises the steps of:
(X) preparing a polyrotaxane according to the present invention, for example, preparing a polyrotaxane by the preparing method comprising the above-described steps (I) and (II);
(XI) adding (B) a polyol and optionally (C) a compound having two or more isocyanate groups to the polyrotaxane, to obtain a composition; and
(XII) reacting the resulting composition under a condition of temperature: for example, room temperature to 150 °C, and pressure: for example, normal pressure; thereby to obtain the molded article, for example, the crosslinked body.

Furthermore, the step (XII) may comprise a step of using a mold to mold a cured body having various shapes, a step of using a coater to mold a cured body in a sheet-shape, a step of coating the surface of a cured body by spray gun, and the like.

The polyrotaxane according to the present invention, a composition comprising the polyrotaxane, and/or the molded article comprising the polyrotaxane have various applications due to their properties. Examples of the application may include, but are not limited to, electrical and electronic component materials, electrical insulation materials for actuators, adhesives and adhesives, sensor materials, scratch-resistant films, anti-vibration, damping, and isolation materials, sound absorbing materials, paints, coating agents, sealants, ink additives and binders, metal and metal oxide binder, abrasive binder, optical materials, friction control agents, cosmetic materials, rubber and elastomer additives, foaming materials, resin modifying and toughening agents, resin compatibilizers, electrolyte materials, rheology control agents, thickeners, fibers, medical biomaterials, mechanical and automotive materials, building materials, clothing and sporting goods and the like.

Hereinafter, the present invention will be described in more detail by using, but not limited to, following examples.

### Examples:

### Analytical device for each compound

The ¹H-NMR measurement was determined by 400 MHz JEOL JNM-AL400 (manufactured by JEOL Ltd.).

The measurement of the molecular weight and the molecular weight distribution was carried out by the TOSOH HLC-8220GPC device. The measurement was carried out under the conditions: column: TSK guard column Super AW-H and TSKgel Super AWM-H (two connected), eluent: dimethyl sulfoxide (DMSO)/0.01M LiBr, column oven: 50 °C, flow rate: 0.5 ml/min, sample concentration: about 0.2 wt/vol%, injection amount: 20 µl, pre-treatment: filtration using a 0.2 um filter, and the standard molecular weight: PEO.

The measurement of the hydroxyl value and acid value was determined by a method according to JIS K 0070: 1992 (both potentiometric titration method).

The decomposition temperature was measured by a thermal analyzer TG/DTA Rigaku TG8120-1C (manufactured by Rigaku Co., Ltd.).

### <Synthesis Example 1: Synthesis of polyrotaxane modified with hydroxypropyl groups, HAPR>

The polyrotaxane formed from linear molecule: polyethylene glycol (number average molecular weight Mn: 11,000); cyclic molecule: α-cyclodextrin; capping groups: adamantane groups, and the polyrotaxane in which the above-described polyrotaxane was modified with hydroxypropyl groups (HAPR) were prepared according to a manner described in WO2008/108411.

The weight average molecular weight Mw of the resulting HAPR determined by GPC was 49,800. Further, NMR analysis revealed that 50 % of hydroxyl groups in cyclodextrin were substituted with hydroxypropyl groups. The measurement of the hydroxyl group value was determined to be 398 mgKOH/g.

### <Example 1>

### <<Reaction step>>

HAPR (50 g, 0.36 mol), dimethylformamide (116.7 g) and potassium hydroxide (0.84 g) were placed in an autoclave equipped with a stirrer, temperature control device and automatic introduction device, and nitrogen substitution was performed to seal the autoclave. After nitrogen substitution, the temperature was raised to 115 °C, and propylene oxide (205 g, 3.53 mol) was introduced while adjusting the reaction temperature to 115 to 120 °C and the gauge pressure to 0.4 MPa or less. After the completion of the introduction, it was aged at 115 to 120 °C until the internal pressure became constant. After completion of the reaction, the mixture was cooled to 60 °C, to obtain Product 1 (372 g).

### <<Purification step>>

The whole amount of the obtained product 1 and 1430 g of distilled water were placed into a 3 L flask and heated to 90 °C with stirring. After the temperature was raised, stirring was stopped, the layers were separated, and then the aqueous layer was removed. An equal amount of distilled water was added to the removed aqueous layer portion, and water washing was repeated twice under the same conditions, to obtain a water-washed product 1 (720 g).

The obtained washed product 1 was placed into a 1 L flask and dehydrated under reduced pressure, to obtain polyrotaxane PR-g-PPG1 (240 g). Further, washing with isopropanol (IPA) and heptane (weight ratio 1:5) gave PR-g-PPG1 having high purity.

The ¹H-NMR measurement of the polyrotaxane PR-g-PPG1 resulted in that the apparent average degree of polymerization of the polypropylene oxy side chain added to the cyclic molecule α-CD was 7.5. In addition, the weight average molecular weight, molecular weight dispersion, hydroxyl value (indicated by "OHV" in Table 1), and decomposition temperature were determined. These results are shown in Table 1. The apparent average degree of polymerization of the polypropylene oxy side chain added to α-CD was determined in accordance with paragraphs [0021] to

[0026] of WO2018/225704 A1 (all of which are incorporated herein by reference). (The same determination was applied to hereinafter).

### <Example 2>

### <<Reaction step>>

Product 2 (450 g) was obtained in a manner similar to the reaction step of Example 1, except that the amount of propylene oxide in Example 1 was changed from 205 g (3.53 mol) to 283 g (4.88 mol).

### <<Purification step>>

The product 2 (755 g) was obtained in a manner similar to the water washing step of Example 1 except that the product 2 was used instead of the product 1 and the amount of distilled water was changed from 1430 g to 1735 g.

Then, polyrotaxane PR-g-PPG2 (310 g) was obtained in a manner similar to dehydration under reduced pressure in Example 1. Further, washing with isopropanol (IPA) and heptane (weight ratio 1:5) gave PR-g-PPG2 having high purity.

The ¹H-NMR measurement of the polyrotaxane PR-g-PPG2 in a manner similar to Example 1 resulted in that the apparent average degree of polymerization of the polypropylene oxy side chain added to the cyclic molecule α-CD was 13. Further, the weight average molecular weight, the molecular weight dispersion, the hydroxyl value, and the decomposition temperature were also determined in a manner similar to Example 1. These results are also shown in Table 1.

<Example 3>

### <<Reaction step>>

Product 3 (519 g) was obtained in a manner similar to the reaction process of Example 1, except that the amount of propylene oxide in Example 1 was changed from 205 g (3.53 mol) to 353 g (6.09 mol).

### <<Purification process>>

The product 3 (750 g) was obtained in a manner similar to the water washing step of Example 1 except that the product 3 was used instead of the product 1 in Example 1 and that the amount of distilled water was changed from 1430 g to 2075 g.

Then, in a manner similar to Example 1, polyrotaxane PR-g-PPG3 (386 g) was obtained by dehydration under reduced pressure. Further, washing with isopropanol (IPA) and heptane (weight ratio 1:5) gave PR-g-PPG3 having high purity.

The ¹H-NMR measurement of the polyrotaxane PR-g-PPG3 in a manner similar to Example 1 resulted in that the apparent average degree of polymerization of the polypropylene oxy side chain added to the cyclic molecule α-CD was 19. Further, the weight average molecular weight, the molecular weight dispersion, the hydroxyl value, and the decomposition temperature were also determined in a manner similar to Example 1. These results are also shown in Table 1.

### <Example 4>

### <<Reaction step>>

Product 4 (623 g) was obtained in a manner similar to the reaction step of Example 1 except that the amount of propylene oxide in Example 1 was changed from 205 g (3.53 mol) to 457 g (7.88 mol).

### <<Purification step>>

A water-washed product 4 (762 g) was obtained in a manner similar to the water-washing step of Example 1 except that the product 4 was used instead of the product 1 in Example 1, and that the amount of distilled water was changed from 1430 g to 2450 g.

Then, in a manner similar to Example 1, polyrotaxane PR-g-PPG4 (482 g) was obtained by dehydration under reduced pressure. Further, washing with isopropanol (IPA) and heptane (weight ratio 1:5) gave PR-g-PPG4 having high purity.

The ¹H-NMR measurement of the polyrotaxane PR-g-PPG4 in a manner similar to Example 1 resulted in that the apparent average degree of polymerization of the polypropylene oxy side chain added to the cyclic molecule α-CD was >19. Further, the weight average molecular weight, the molecular weight dispersion, the hydroxyl value, and the decomposition temperature were also determined in a manner similar to Example 1. These results are also shown in Table 1.

### <Comparative Example 1>

The modified polyrotaxane PR-g-PPGX was prepared by the method described in Example 4 of WO2018/225704.

Specifically, the unmodified polyrotaxane (referred to as APR20) was prepared using PEG having a molecular weight of 20,000 as a linear molecule according to the methods described in WO2005/052026 and WO2013/147301. The weight average molecular weight Mw of the obtained APR20 was 83,000.

Into the reaction flask, 1 g of APR20 and 20 ml of propylene oxide were introduced, followed by introducing 1 ml of diazabicyclononen (DBN) and 1 ml of 1 mol/L tetrabutylammonium fluorolide (TBAF) with stirring. Then, the reaction was continued with stirring at 30 °C for 72 hours. The resulting reaction product was purified. The analysis by GPC resulted in that the weight average molecular weight Mw of the obtained modified polyrotaxane PR-g-PPGX was 167,000.

The ¹H-NMR measurement of the polyrotaxane PR-g-PPGX resulted in that the apparent average degree of polymerization of the polypropylene oxy side chain added to the cyclic molecule α-CD was 5.7. Further, the weight average molecular weight, the molecular weight dispersion, the hydroxyl value, and the decomposition temperature were also determined in a manner similar to Example 1. These results are shown in Table 1.

### <Comparative Example 2>

The HAPR prepared in Synthesis Example 1 was used as it was.

### <Comparative Example 3>

After drying 10 g of HAPR prepared in Synthesis Example 1 in a vacuum dryer at 100 °C, the sample was introduced into a reaction flask equipped with a stirrer, and 35 g of ε-caprolactone was introduced while slowly flowing nitrogen. After uniformly stirring at 100 °C for 60 minutes with a mechanical stirrer, 0.3 g of tin 2-ethylhexanoate diluted with toluene in advance (50 wt% solution) was added, and the mixture was reacted at 130 °C for 5 hours. Residual ε-caprolactone was analyzed by gas chromatograph, and if it was less than 1% of the introduced amount, the reaction was terminated. The solvent was removed, to give the reaction product PR-X (44 g).

The IR measurement of PR-X resulted in that a peak derived from the ester of 1736 cm⁻¹ was observed. Further, the determination by GPC resulted in that the weight average molecular weight Mw was 182,000, and that the molecular weight distribution Mw/Mn was 1.21.

The ¹H-NMR measurement of the polyrotaxane PR-X resulted in that a polycaprolactone chain was bound to α-CD, which was a cyclic molecule.

The hydroxyl value was 87 mgKOH/g.

### <Solubility>

For the polyrotaxane PR-g-PPG1 to 4 obtained in Examples 1 to 4, the polyrotaxane PR-g-PPGX obtained in Comparative Example 1, the polyrotaxane HAPR of Comparative Example 2, and the polyrotaxane PR-X obtained in Comparative Example 3, the solubility in the polyether polyol material was investigated.

Polypropylene glycol 700 (PPG700, number average molecular weight: 700), polypropylene glycol 1000 (PPG1000, number average molecular weight: 1000), polypropylene glycol 2000 (PPG2000, number average molecular weight: 2000), polypropylene glycol 3000 (PPG3000, number average molecular weight: 3000), Polypropylene glycol 6000 (PPG6000, number average molecular weight: 6000), Polytetramethylene glycol 650 (PTMG650, number average molecular weight: 650), and Polytetramethylene glycol 1000 (PTMG1000, number average molecular weight: 1000) were used as polyether polyol materials.

The results of these solubilities are shown in Table 1.

Furthermore, the solubility was checked by the following standard: preparing a solute (various polyrotaxanes) and a solvent so as to be a 2 wt% solution, and determining whether or not to dissolve at room temperature (25 °C) (however, B is under heating conditions).
AA: Dissolves transparently.
A: There is turbidity, but there is no sediment.
B: Melted and compatible by heating.
C: There is an insoluble matter.

### [Table 1]

**TABLE 1. Physical properties of each polyrotaxane**

| | | **Ex. 1** | **Ex. 2** | **Ex. 3** | **Ex. 4** | **Comp Ex. 1** | **Comp Ex. 2** | **Comp Ex. 3** |
|---|---|---|---|---|---|---|---|---|
| Modified polyrotaxane | | PR-g-PPG1 | PR-g-PPG2 | PR-g-PPG3 | PR-g-PPG4 | PR-g-PPGX | HAPR | PR-X |
| Mw of Modified polyrotaxane | | 124,900 | 152,700 | 163,100 | 182,700 | 167,000 | 49,800 | 182,800 |
| Mw/Mn | | 1.20 | 1.18 | 1.19 | 1.23 | 1.25 | 1.4 | 1.21 |
| Amount of component (%) | | 94 | 96 | 93 | 95 | 92 | 94 | 98 |
| Raw material in modified polyrotaxane : PO additional ratio (parts by weight) ^{*1)} | | 1:1.5 | 1:2.1 | 1:2.3 | 1:2.7 | 1:1.0 | 1:0 | 1:0 |
| Apparent average polymerization n | | 7.5 | 13 | 19 | >19^{*4)} | 5.7 | - | - |
| OHV of Modified polyrotaxane (mgKOH/g) | | 123 | 97 | 83 | 69 | 71 | 396 | 87 |
| Decomposition temperature (°C) ^{*2)} | | 328 | 328 | 330 | 332 | - | - | 320 |
| Solubility of Modified polyrotaxane ^{*3)} | | | | | | | | |
| | ▪PPG700 | ○ | ○ | ○ | ○ | ○ | Δ | ○ |
| | ▪PPG1000 | ○ | ○ | ○ | ○ | Δ ^{*5)} | × | Δ |
| | ▪PPG2000 | ○ | ○ | ○ | ○ | × | × | × |
| | ▪PPG3000 | Δ | ○ | ○ | ○ | × | × | × |
| | ▪PPG6000 | Δ | Δ | Δ | Δ | × | × | × |
| | ▪PTMG650 | ○ | ○ | ○ | ○ | ○ | × | Δ*⁵⁾ |
| | ▪PTMG1000 | ○ | ○ | ○ | ○ | Δ | × | Δ |

| | | | | | | | | |
|---|---|---|---|---|---|---|---|---|
| *1) When an amount of raw material in modified polyrotaxane is normalized in 1 part by mass, an amount of additional PO is calculated by [(Mw of modified polyrotaxane after added PO) - (Mw of raw polyrotaxane before the PO added)]/ (Mw of raw polyrotaxane before the PO added). *2) As measured under nitrogen flow at 20 °C, the temperature of 10 % reduction of mass was determined as Decomposition temperature. *3) 2 wt % Solubility at room temperate (25 °C),○: Soluble, transparent, △: Turbid, but no sediment, ×: Insoluble matter. *4) Impossible to estimate n by NMR because of high PO addition. *5) Soluble by heating, compatible. | | | | | | | | |

### <Example 5: Hydrolysis test>

In a container, 1 g of PR-g-PPG2 was dissolved in 9 g of dimethylacetamide. Into the container, 0.5 g of water and 0.2 g of diazabicyclononene (DBN) were introduced, and the temperature was kept at 50 °C for 162 hours with stirring. Then, the temperature was raised to 90 °C, the mixture was allowed to stand for another 41 hours, then 0.2 g of DBN was added, followed by stirring for 17 hours. In this work, the solution was sampled periodically and GPC measurement of the modified polyrotaxane PR-g-PPG2 was performed. Table 2 shows the retention time of the peak of polyrotaxane.

### <Comparative Example 4: Hydrolysis test>

The experiment similar to Example 5 was also performed on the polyrotaxane PR-X obtained in Comparative Example 3. The results are shown in Table 2.

Table 2 shows the results of measuring GPC in the process of the hydrolysis test with the strong base DBN and summarizing the retention time of the peak. The longer the retention time means the smaller the molecular weight, indicating that polyrotaxane was decomposed.

Table 2 shows that the retention time of PR-g-PPG2 of Example 5 hardly changed, and that it showed excellent hydrolysis resistance as compared with PR-X of Comparative Example 3.

### [Table 2]

**TABLE 2. Changes in retention time of GPC for samples at each step of Hydrolysis test**

| **Serial experimental procedure** | | **Retention time (min.)** | |
|---|---|---|---|
| | | **PR-g-PPG2** | **PR-X** |
| 50°C, 0h | | 6.91 | 6.86 |
| | 66h | 6.91 | 6.90 |
| | 138h | 6.91 | 6.91 |
| | 162h | 6.92 | 6.91 |
| 90°C, 17h | | 6.92 | 7.00 |
| | 41h | 6.93 | 7.00 |
| Additional DBN, 17h | | 6.93 | 7.11 |

### <Synthesis Example 2: Preparation of PPG1000 Prepolymer>

44.6 g of bis (isocyanatomethyl) cyclohexane (TAKENATE 600, manufactured by Mitsui Chemicals) was placed in a reaction vessel, and 50 g of PPG1000 (manufactured by Fujifilm Wako Pure Chemical Industries, Ltd.) was slowly added dropwise with nitrogen flow and stirring at 80 °C, and reacted for 4 hours. The isocyanate concentration of the obtained PPG1000 prepolymer having an isocyanate group at both ends (PRE-1k) was measured and found to be 11.35 wt%.

### <Synthesis Example 3: Preparation of PPG2000 Prepolymer>

22.3 g of bis (isocyanatomethyl) cyclohexane (TAKENATE 600, manufactured by Mitsui Chemicals) was placed in a reaction vessel, and 50 g of PPG2000 (manufactured by Fujifilm Wako Pure Chemical Industries, Ltd.) was slowly added dropwise with nitrogen flow and stirring at 80 °C, and reacted for 4 hours. The isocyanate concentration of the obtained PPG2000 prepolymer having an isocyanate group at both ends (PRE-2k) was measured and found to be 7.19 wt%.

### <Example 6: Preparation of film from composition>

After dissolving 4.0 g of PR-g-PPG2 and 2.56 g of PPG1000 prepolymer (PRE-1k) prepared in Synthesis Example 2 in 6.56 g of ethyl acetate, the solution was applied to a peel-treated glass substrate, and the reaction was completed by heating in a vacuumed oven at 85 °C for 2 hours. The film was peeled off from the glass substrate, to obtain a film having a thickness of 40 to 60 µm.

### <Examples 7 to 10> and <Comparative Examples 5 to 8>

A film was prepared in a manner similar to Example 6 except that the polyrotaxane used, the prepolymer used, and the weights used thereof were as shown in Table 3. The amount of ethyl acetate used as a solvent was adjusted so that the concentration of the non-volatile component was about 50 wt%.

Table 3 showed that in the formulation using the polyrotaxane of the present invention, the compatibility with polypropylene diols having a number average molecular weight of 1000 or more and their prepolymers (modified products) was good, and that the obtained film was transparent and had excellent flexibility.

### [Table 3]

**TABLE 3. Composition and the physical properties of each film**

| **Component** | **Ex. 6** | **Comp Ex. 5** | **Ex. 7** | **Comp Ex. 6** | **Ex. 8** | **Ex. 9** | **Comp Ex. 7** | **Ex. 10** | **Comp Ex. 8** |
|---|---|---|---|---|---|---|---|---|---|
| PR-g-PPG2 (g) | 4.00 | - | 4.00 | | | | | | |
| PR-g-PPG4 (g) | - | - | | | 4.00 | 5.00 | | 0.55 | |
| PR-X (g) | - | 4.00 | | 4.00 | | | 4.00 | | 0.55 |
| PRE-1k (g) | | | | | | | | 5.80 | 5.80 |
| PRE-2k (g) | 4.03 | 3.50 | | | | | | | |
| PPG700 (g) | | | | | | | | 5.00 | 5.00 |
| PPG2000 (g) | - | - | 4.00 | 4.00 | | | | | |
| PPG3000 (g) | | | | | 6.00 | 5.00 | 6.00 | | |
| HDI **(g)** | - | - | | | 1.53 | 1.61 | 1.71 | | |
| **X6HDI (g)** | | | 2.12 | 1.98 | | | | | |
| **Ethyl acetate (g)** | 8.03 | 7.50 | 10.1 | 10.0 | 11.5 | 11.6 | 11.7 | 11.3 | 11.3 |
| **Catalyst (mg)** | 1.6 | 1.5 | 1.6 | 1.6 | 2.0 | 2.0 | 2.0 | 2.3 | 2.3 |

| **Physical properties of film** | | | | | | | | | |
|---|---|---|---|---|---|---|---|---|---|
| Hardness | ○ | Δ | ○ | Δ | ○ | ○ | × | ○ | ○ |
| Appearance | Transparent | Turbid | Transparent | Turbid | Transparent | Transparent | Turbid | Transparent | Transparent |
| Stress@10%elogation(MPa) | 0.30 | Unable | 0.50 | Unable | 0.22 | 0.33 | Unable | 0.08 | 0.06 |
| Stress@50%elogation(MPa) | 1.9 | Unable | 1.6 | Unable | 0.95 | 1.4 | Unable | 0.31 | 0.25 |
| Breaking elongation (%) | 85 | Unable | 65 | Unable | 139 | 114 | Unable | 430 | 380 |
| Breaking strength (MPa) | 3.7 | Unable | 2.3 | Unable | 4.1 | 4.2 | Unable | 2.6 | 1.6 |

| | | | | | | | | | |
|---|---|---|---|---|---|---|---|---|---|
| Unable: Tensile test could not be carried out. | | | | | | | | | |

## Claims

1. A polyrotaxane comprising capping groups each locating at each end of a pseudopolyrotaxane, which has a linear molecule and a cyclic molecule(s) in which the linear molecule is included in a cavity (cavities) of the cyclic molecule(s) in a skewered manner, in order to prevent the dissociation of the cyclic molecule(s),
wherein the cyclic molecule comprises a group having a chain comprised of a propyleneoxy repeating unit, and
the polyrotaxane dissolves in polyalkyleneoxy polyol having a number average molecular weight of 1,000 or more, preferably a number average molecular weight of 1,500 to 6,000, more preferably a number average molecular weight of 2,000 to 5,000 at room temperature.

2. The polyrotaxane according to claim 1, wherein the polyrotaxane comprises a hydroxyl group, and a hydroxyl group value of the polyrotaxane ranges from 40 to 130 mgKOH/g.

3. A composition comprising the (A) polyrotaxane according to claim 1 or 2; and (B) a polyol.

4. The composition according to claim 3 further comprising (C) a compound having two or more isocyanate groups.

5. The composition according to claim 3 or 4, wherein when the total weights of the (A) polyrotaxane and the (B) polyol are normalized into 100 parts by weight, the (A) polyrotaxane comprises 0.1 to 55.0 parts by weight.

6. The composition according to anyone of claims 3 to 5, wherein the (B) polyol is polypropyleneoxypolyol having a number average molecular weight of 1,000 or more, or the modification or copolymer thereof.

7. A molded article formed from the composition according to anyone of claims 3 to 6.
